# EUROPEAN PATENT SPECIFICATION

(11) **EP 2 074 321 B1**
(45) Date of publication and mention of the grant of the patent: **05.12.2012**
(21) Application number: 06851899.2
(22) Date of filing: 12.10.2006
(51) Int. Cl.: F02K 3/02, F02K 3/075

(54) **FAN VARIABLE AREA NOZZLE WITH ADAPTIVE STRUCTURE AND METHOD OF VARYING A FAN EXIT AREA OF A GAS TURBINE ENGINE**
MANTELSTROMDÜSE MIT VARIABLEM AUSTRITTSQUERSCHNITT MIT ADAPTIVER STRUKTUR SOWIE VERFAHREN ZUR VERÄNDERUNG DES AUSTRITTQUERSCHNITTS DER GEBLÄSEDÜSE EINER GASTURBINE
TUYERE A SECTION VARIABLE A SOUFFLANTE AVEC STRUCTURE ADAPTATIVE ET PROCEDE DE VARIER LA SECTION DE SORTIE DE LA TUYERE DU FLUX SECONDAIRE D'UNE TURBINE A GAZ

(43) Date of publication of application: 01.07.2009
(73) Proprietor: United Technologies Corporation, Hartford, CT 06101 (US)
(72) Inventor: CHAUDHRY, Zaffir, South Glastonbury, CT 06073 (US)
(74) Representative: Tomlinson, Kerry John
(86) International application number: PCT/US2006/039948
(87) International publication number: WO 2008/063154

(56) References cited:
- US-A- 3 020 714
- US-A- 4 112 677
- US-A1- 2004 154 283
- US-A1- 2006 000 211
- US-A1- 2006 101 807

## Description

The present invention relates to a gas turbine engine, and more particularly to a turbofan engine having an adaptive or morphing fan nacelle thereof.

Conventional gas turbine engines generally include a fan section and a core engine with the fan section having a larger diameter than that of the core engine. The fan section and the core engine are disposed about a longitudinal axis and are enclosed within an engine nacelle assembly.

Combustion gases are discharged from the core engine through a core exhaust nozzle while an annular fan flow, disposed radially outward of the primary airflow path, is discharged through an annular fan exhaust nozzle defined between a fan nacelle and a core nacelle. A majority of thrust is produced by the pressurized fan air discharged through the fan exhaust nozzle, the remaining thrust being provided from the combustion gases discharged through the core exhaust nozzle.

The fan nozzles of conventional gas turbine engines have a fixed geometry. The fixed geometry fan nozzles are a compromise suitable for take-off and landing conditions as well as for cruise conditions. Some gas turbine engines have implemented fan variable area nozzles, The fan variable area nozzle provide a smaller fan exit nozzle diameter during cruise conditions and a larger fan exit nozzle diameter during take-off and landing conditions. Existing fan variable area nozzles typically utilize relatively complex mechanisms that increase overall engine weight to the extent that the increased fuel efficiency therefrom may be negated. Exemplary prior art fan variable area nozzles having hinged flaps which can be deflected into the annular fan flow path are disclosed in US2006/101807 A1, US4112677 and US 2004/154283 A1.

Accordingly, it is desirable to provide an effective, lightweight fan variable area nozzle for a gas turbine engine.

### SUMMARY OF THE INVENTION

The present invention provides a nacelle assembly for a gas turbine engine comprising: a core nacelle defined about an axis; and a fan nacelle mounted at least partially around said core nacelle, said fan nacelle having a fan variable area nozzle; characterised by said assembly further comprising a flexible adaptive segment which varies a fan exit area between said fan nacelle and said core nacelle, wherein said flexible adaptive segment includes a multiple of flexible skins integrated into a skin section of the fan nacelle, a linkage and an actuator system.

The present invention also provides a method of varying a fan exit area of a gas turbine engine comprising the steps of: (A) locating a fan variable area nozzle to define a fan exit area between a fan nacelle and a core nacelle; and (B) morphing a flexible adaptive segment of the fan variable area nozzle between a first shape and a second shape to vary the fan exit area, wherein the flexible adaptive segment includes a multiple of flexible skins integrated into a skin section of the fan nacelle, a linkage and an actuator system.

In an embodiment, the FVAN is separated into a multiple of sectors which are each independently adjustable by an associated actuator of the actuator system. The adaptive segments advantageously provide a flexible sealed interface between the sectors to provide a low drag asymmetrical fan nozzle exit area and allows the shape of the FVAN to change in addition to the fan nozzle exit area.

The present invention therefore provides an effective, lightweight fan variable area nozzle for a gas turbine engine.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1A is a general schematic partial fragmentary view of an exemplary gas turbine engine embodiment for use with the present invention;
Figure 1B is a perspective partial fragmentary view of the engine;
Figure 1C is a rear view of the engine;
Figure 2 is a sectional view through a section of the FVAN; and
Figure 3 is a sectional view of another FVAN with a linear actuator.

### DETAILED DESCRIPTION OF THE PREFERRED EMBODIMENT

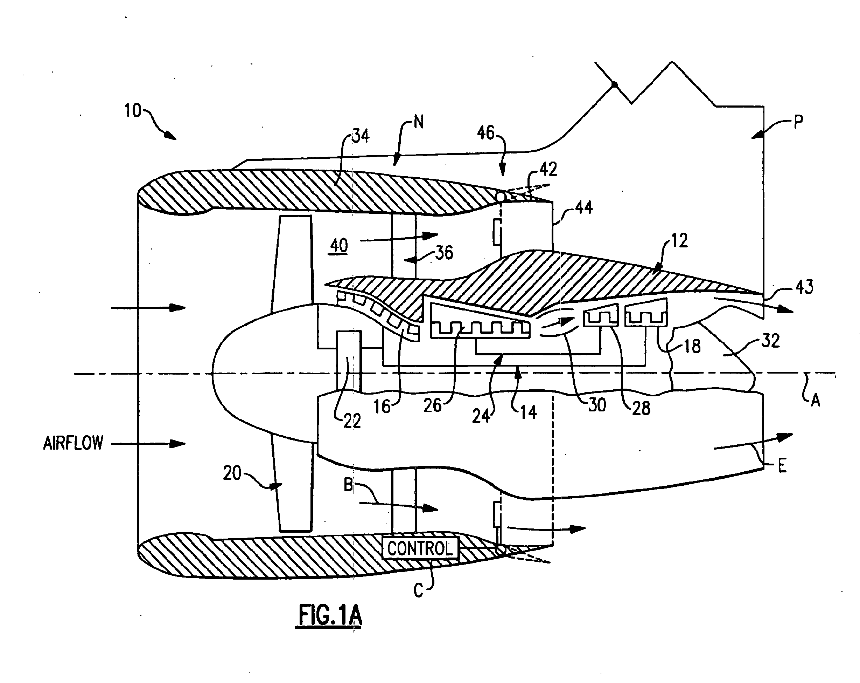

Figure 1A illustrates a general partial fragmentary schematic view of a gas turbofan engine 10 suspended from an engine pylon P within an engine nacelle assembly N as is typical of an aircraft designed for subsonic operation.

The turbofan engine 10 includes a core engine within a core nacelle 12 that houses a low spool 14 and high spool 24. The low spool 14 includes a low pressure compressor 16 and low pressure turbine 18. The low spool 14 drives a turbofan 20 through a gear train 22. The high spool 24 includes a high pressure compressor 26 and high pressure turbine 28. A combustor 30 is arranged between the high pressure compressor 26 and high pressure turbine 28. The low and high spools 14, 24 rotate about an engine axis of rotation A.

The engine 10 is preferably a high-bypass geared turbofan aircraft engine. Preferably, the engine 10 bypass ratio is greater than ten (10), the turbofan diameter is significantly larger than that of the low pressure compressor 16, and the low pressure turbine 18 has a pressure ratio that is greater than 5. The gear train 22 is preferably an epicycle gear train such as a planetary gear system or other gear system with a gear reduction ratio of greater than 2.5. It should be understood, however, that the above parameters are only exemplary of a preferred geared turbofan engine and that the present invention is likewise applicable to other gas turbine engines.

Airflow enters a fan nacelle 34, which at least partially surrounds the core nacelle 12. The turbofan 20 communicates airflow into the core nacelle 12 to power the low pressure compressor 16 and the high pressure compressor 26. Core airflow compressed by the low pressure compressor 16 and the high pressure compressor 26 is mixed with the fuel in the combustor 30 and expanded over the high pressure turbine 28 and low pressure turbine 18. The turbines 28, 18 are coupled for rotation with, respective, spools 24, 14 to rotationally drive the compressors 26, 16 and through the gear train 22, the turbo fan 20 in response to the expansion. A core engine exhaust E exits the core nacelle 12 through a core nozzle 43 defined between the core nacelle 12 and a tail cone 32.

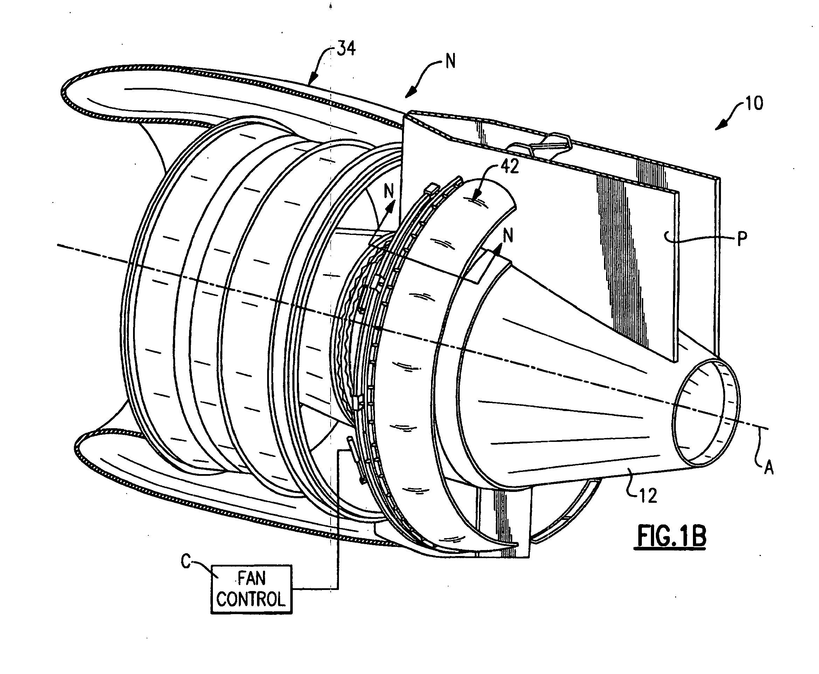

The core nacelle 12 is supported within the fan nacelle 34 by structure 36 often generically referred to as an upper and lower bifurcation. A bypass flow path 40 is defined between the core nacelle 12 and the fan nacelle 34. The engine 10 generates a high bypass flow arrangement with a bypass ratio in which approximately 80 percent of the airflow entering the fan nacelle 34 becomes bypass flow B. The bypass flow B communicates through the generally annular bypass flow path 40 and is discharged from the engine 10 through a fan variable area nozzle (FVAN) 42 (also illustrated in Figure 1B) which defines a fan nozzle exit area 44 between the fan nacelle 34 and the core nacelle 12 at an end segment 46 of the fan nacelle 34.

Thrust is a function of density, velocity, and area. One or more of these parameters can be manipulated to vary the amount and direction of thrust provided by the bypass flow B. The FVAN 42 changes the physical area and geometry to manipulate the thrust provided by the bypass flow B. However, it should be understood that the nozzle exit area 44 may be effectively altered by methods other than structural changes, for example, by altering the boundary layer. Furthermore, it should be understood that effectively altering the nozzle exit area 44 is not limited to physical locations approximate the exit of the fan nacelle 34, but rather, may include the alteration of the bypass flow B at other locations.

The FVAN 42 defines the fan nozzle exit area 44 for discharging axially the fan bypass flow B pressurized by the upstream turbofan 20. A significant amount of thrust is provided by the bypass flow B due to the high bypass ratio. The turbofan 20 of the engine 10 is preferably designed for a particular flight condition typically cruise at 0.8M and 35,000 feet. As the turbofan 20 is efficiently designed at a particular fixed incidence for the cruise condition, the FVAN 42 is operated to vary the fan nozzle exit area 44 for efficient engine operation at other flight conditions, such as landing and takeoff and to meet other operational parameters such as noise level. Preferably, the FVAN 42 defines a nominal converged cruise position for the fan nozzle exit area 44 and radially opens relative thereto to define a diverged position for other flight conditions. The FVAN 42 preferably provides an approximately 20% (twenty percent) change in the fan exit nozzle area 44. It should be understood that other arrangements as well as essentially infinite intermediate positions as well as thrust vectored positions in which some circumferential sectors of the FVAN 42 are converged or diverged relative to other circumferential sectors are likewise usable with the present invention.

In addition to the area change of the fan exit nozzle area 44, the flexible adaptive segment 48 permits the shape of the FVAN 42 itself to be changed. That is, the flexible adaptive segment 48 facilitates a shape change of the fan exit nozzle area 44 upstream of the trailing edge 34T, for example only, to a different thickness profile, or the like.

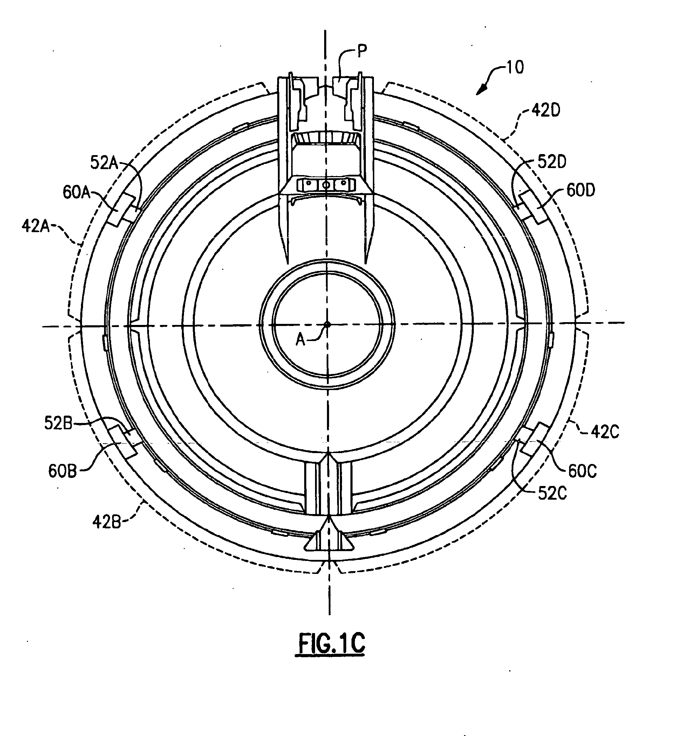

The FVAN 42 is preferably separated into four or more sectors 42A-42D (Figure 1C) which are each independently adjustable to asymmetrically vary the fan nozzle exit area 44. It should be understood that although four segments are illustrated, any number of segments may alternatively or additionally be provided.

In operation, the FVAN 42 communicates with a controller C or the like to adjust the fan nozzle exit area 44. Other control systems including an engine controller flight control system may likewise be usable with the present invention. By adjusting the entire periphery of the FVAN 42 in which all sectors are moved uniformly, thrust efficiency and fuel economy are maximized during each flight condition. By separately adjusting the circumferential sectors 42A-42D of the FVAN 42 to provide an asymmetrical fan nozzle exit area 44, engine bypass flow is selectively vectored to provide, for example only, trim balance or thrust controlled maneuvering enhanced ground operations or short field performance.

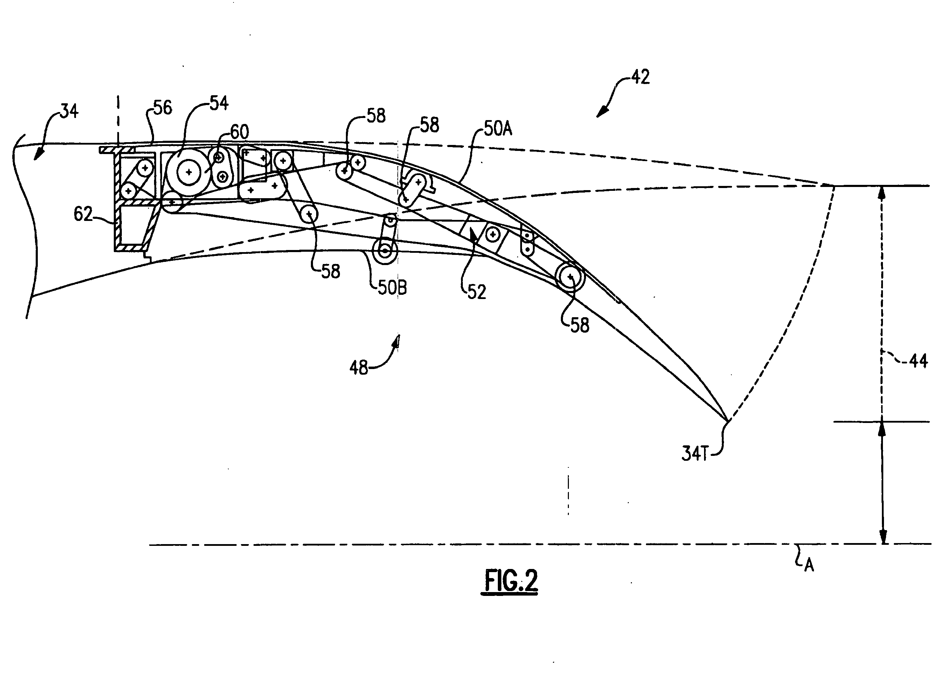

Referring to Figure 2, the FVAN 42 generally includes a flexible adaptive segment 48 which varies the fan nozzle exit area 44. The flexible adaptive segment 48 is preferably incorporated into the end segment 46 of the fan nacelle 34 to include a trailing edge 34T thereof. The flexible adaptive segment 48 generally includes a multiple of flexible skins 50a, 50b, a linkage 52 and an actuator system 54.

The flexible skins 50a, 50b are integrated into a skin section 56 of the fan nacelle 34. The flexible skins 50a, 50b are resilient members which permit the flexible adaptive segment 48 to change shape or morph between a converged shape and a diverged shape (shown in phantom). That is, the end segment 46 of the fan nacelle 34 essentially flexes without a discrete hinge line. Preferably, the failsafe shape is the diverged shape as the diverged shape is utilized for landing and takeoff. The flexible adaptive segment 48 also preferably provides a flexible sealed interface between the sectors 42A-42D (Figure 1C).

The linkage 52 is driven by the actuator system 54 to change the shape of the flexible adaptive segment 48 between the converged shape and the diverged shape. The linkage 52 includes pivots 58 which include pivoting members such as bearings, bushings or flexures to achieve the desired shape change. Flexures may be preferred as flexures minimize hysteresis. It should be understood that the linkage 52 and pivots 58 are geometrically arranged to provide the desired FVAN 42 positions in response to the actuator system 54 position.

The actuator system 54 preferably includes a multitude of rotary actuators 60 mounted to a fixed component within the fan nacelle 34 such as spar 62 or the like. Each rotary actuator 60 rotates to drives the linkage 52 and change the shape of the flexible adaptive segment 48 between the converged shape and diverged shape.

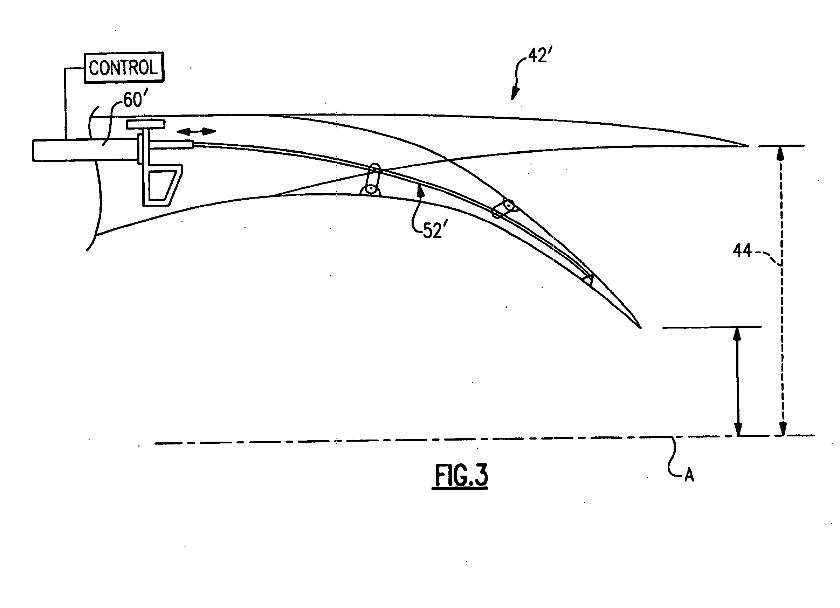

Referring to Figure 3, another embodiment of the FVAN 42 includes a linear actuator 60' mounted to a fixed component within the fan nacelle 34 such as the spar 62 or the like. Each linear actuator 60' strokes to drive a linkage assembly 52' to change the shape of the flexible adaptive segment 48 between the converged shape and the diverged shape (shown in phantom). It should be understood that other actuators and combinations thereof may also be utilized with the present invention.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention as defined by the appended claims.

## Claims

1. A nacelle assembly for a gas turbine engine (10) comprising:
a core nacelle (12) defined about an axis (A); and
a fan nacelle (34) mounted at least partially around said core nacelle, said fan nacelle having a fan variable area nozzle (42);
**characterised by** said assembly further comprising a flexible adaptive segment (48) which varies a fan exit area (44) between said fan nacelle and said core nacelle, wherein said flexible adaptive segment (48) includes a multiple of flexible skins (50a, 50b) integrated into a skin section (56) of the fan nacelle (34), a linkage (52, 52') and an actuator system (54).

2. The assembly as recited in claim 1, wherein said flexible adaptive segment (48) flexes relative to said fan nacelle (34) without a discrete hinge line.

3. The assembly as recited in claim 1 or 2, wherein said flexible adaptive segment (48) includes a trailing edge (34T) of said fan variable area nozzle (42).

4. The assembly as recited in claim 1, 2 or 3 wherein said actuator system (54) includes a rotary actuator (60) which flexes said flexible adaptive segment (48).

5. The assembly as recited in claim 1, 2 or 3 wherein said actuator system (54) includes a linear actuator (60') which flexes said flexible adaptive segment (48).

6. The assembly as recited in any preceding claim, wherein said linkage (52) is arranged to change a shape of said flexible adaptive segment (48) in response to said actuator system (54) which drives said linkage.

7. The assembly as recited in any preceding claim, wherein said fan exit area defines an at least partially annular fan exit area between said fan nacelle and said core nacelle.

8. A gas turbine engine (10) comprising:
a core engine defined about an axis (A);
a gear system (22) driven by said core engine;
a fan (20) driven by said gear system about said axis; and
a nacelle assembly as claimed in any preceding claim;
said core nacelle being defined at least partially about said core engine; and
said fan nacelle being mounted around said fan.

9. The engine as recited in claim 8, wherein said flexible adaptive segment (48) morphs relative to said fan nacelle (34) without a discrete hinge line.

10. A method of varying a fan exit area of a gas turbine engine (10) comprising the steps of:
(A) locating a fan variable area nozzle (42) to define a fan exit area (44) between a fan nacelle (34) and a core nacelle (12); and
(B) morphing a flexible adaptive segment (48) of the fan variable area nozzle between a first shape and a second shape to vary the fan exit area (44), wherein the flexible adaptive segment (48) includes a multiple of flexible skins (50a, 50b) integrated into a skin section (56) of the fan nacelle (34), a linkage (52, 52') and an actuator system (54).

11. A method as recited in claim 10, wherein said step (B) further comprises:
increasing the fan exit area (44) during takeoff.

12. A method as recited in claim 10 or 11, wherein said step (B) further comprises flexing the flexible skins (50a, 50b) of the flexible adaptive segment; and/or wherein said step (B) further comprises deforming the flexible skins (50a, 50b) of the flexible adaptive segment; and/or wherein said step (B) further comprises changing a shape of the flexible adaptive segment.

13. A method as recited in claim 10, 11 or 12, wherein said step (A) further comprises:
locating the fan variable area nozzle (42) at an aft most section of the fan nacelle, the flexible adaptive segment (48) including a trailing edge (34T) of the fan variable area nozzle.

14. A method as recited in claim 10, 11, 12 or 13, wherein said step (B) further comprises:
asymmetrically adjusting the fan exit area (44) to vector thrust through the fan variable area nozzle (42).

## Patentansprüche

1. Gondelanordnung für eine Turbinenmaschine (10) umfassend:
eine Kerngondel (12), die um eine Achse (A) definiert ist; und
eine Bläsergondel (34), die zumindest teilweise um die Kerngondel angebracht ist, wobei die Bläsergondel eine bereichsvariable Bläserdüse (42) aufweist;
**dadurch gekennzeichnet, dass** die Anordnung des Weiteren ein flexibles adaptives Segment (48) umfasst, das einen Bläserausgangsbereich (44) zwischen der Bläsergondel und der Kerngondel variiert, wobei das flexible adaptive Segment (48) eine Mehrzahl von flexiblen Häuten (50a, 50b), die in einen Hautbereich (56) der Bläsergondel (34) integriert sind, eine Verbindung (52, 52') und ein Aktuatorsystem (54) beinhaltet.

2. Anordnung nach Anspruch 1, wobei sich das flexible adaptive Segment (48) relativ zu der Bläsergondel (34) ohne eine diskrete Schwenklinie biegt.

3. Anordnung nach Anspruch 1 oder 2, wobei das flexible adaptive Segment (48) eine Hinterkante (34T) der bereichsvariablen Bläserdüse (42) beinhaltet.

4. Anordnung nach Anspruch 1, 2 oder 3, wobei das Aktuatorsystem (54) einen Rotationsaktuator (60) beinhaltet, der das flexible adaptive Segment (48) biegt.

5. Anordnung nach Anspruch 1, 2 oder 3, wobei das Aktuatorsystem (54) einen Linearaktuator (60') beinhaltet, der das flexible adaptive Segment (48) biegt.

6. Anordnung nach einem der vorangehenden Ansprüche, wobei die Verbindung (52) derart angeordnet ist, dass sie eine Gestalt des flexiblen adaptiven Segments (48) in Erwiderung auf den Aktuatorsystem (54), der die Verbindung antreibt, ändert.

7. Anordnung nach einem der vorangehenden Ansprüche, wobei der Bläserausgangsbereich einen zumindest teilweise ringförmigen Bläserausgangsbereich zwischen der Bläsergondel und der Kerngondel definiert.

8. Gasturbinenmaschine (10) umfassend:
eine Kernmaschine, die um eine Achse (A) definiert ist;
ein Getriebesystem (22), das durch die Kernmaschine angetrieben ist;
einen Bläser (20), der von dem Getriebesystem um die Achse angetrieben ist; und
eine Gondelanordnung nach einem der vorangehenden Ansprüche;
wobei die Kerngondel zumindest teilweise um die Kernmaschine definiert ist; und
wobei die Bläsergondel um den Bläser angebracht ist.

9. Maschine nach Anspruch 8, wobei das flexible adaptive Segment (48) sich relativ zu der Bläsergondel (34) ohne eine diskrete Schwenklinie verformt.

10. Verfahren zum Variieren eines Bläserausgangsbereichs einer Gasturbinenmaschine (10) umfassend die Schritte:
(A) Anordnen einer bereichsvariablen Bläserdüse (42), um einen Bläserausgangsbereich (44) zwischen einer Bläsergondel (34) und einer Kerngondel (12) zu definieren; und
(B) Verformen eines flexiblen adaptiven Segments (48) der bereichsvariablen Bläserdüse zwischen einer ersten Gestalt und einer zweiten Gestalt, um den Bläserausgangsbereich (44) zu variieren, wobei das flexible adaptive Segment (48) eine Mehrzahl von flexiblen Häuten (50a, 50b), die in einen Hautbereich (56) der Bläsergondel (34) integriert sind, eine Verbindung (52, 52') und ein Aktuatorsystem (54) beinhaltet.

11. Verfahren nach Anspruch 10, wobei der Schritt (B) des Weiteren umfasst:
Erhöhen des Bläserausgangsbereichs (44) während eines Starts.

12. Verfahren nach Anspruch 10 oder 11, wobei der Schritt (B) des Weiteren das Biegen der flexiblen Häute (50a, 50b) des flexiblen adaptiven Segments umfasst; und/oder wobei der Schritt (B) des Weiteren das Verformen der flexiblen Häute (50a, 50b) des flexiblen adaptiven Segments umfasst; und/oder wobei der Schritt (B) des Weiteren das Ändern einer Gestalt des flexiblen adaptiven Segments umfasst.

13. Verfahren nach Anspruch 10, 11 oder 12, wobei der Schritt (A) des Weiteren umfasst:
Anordnen der bereichsvariablen Bläserdüse (42) an einem hintersten Bereich der Bläsergondel, wobei das flexible adaptive Segment (48) eine Hinterkante (34T) der bereichsvariablen Bläserdüse beinhaltet.

14. Verfahren nach Anspruch 10, 11, 12 oder 13, wobei der Schritt (B) des Weiteren umfasst:
asymmetrisches Anpassen des Bläserausgangsbereichs (44) an einen Schubvektor durch die bereichsvariable Bläserdüse (42).

## Revendications

1. Ensemble de nacelles pour un turbomoteur (10), comprenant :
une nacelle primaire (12) définie autour d'un axe (A) ; et
une nacelle de soufflante (34) montée au moins partiellement autour de ladite nacelle primaire, ladite nacelle de soufflante possédant une tuyère de soufflante à section variable (42) ;
ledit ensemble étant **caractérisé en ce qu'**il comprend un segment flexible adaptatif (48) permettant de faire varier une section de sortie de soufflante (44) entre ladite nacelle de soufflante et ladite nacelle primaire, lequel segment flexible adaptatif (48) comporte une pluralité de revêtements flexibles (50a, 50b) intégrés dans un tronçon de revêtements (56) de la nacelle de soufflante (34), une tringlerie (52, 52') et un système actionneur (54).

2. Ensemble selon la revendication 1, dans lequel ledit segment flexible adaptatif (48) fléchit relativement à ladite nacelle de soufflante (34) sans aucune ligne charnière discrète.

3. Ensemble selon la revendication 1 ou 2, dans lequel ledit segment flexible adaptatif (48) comporte un bord de fuite (34T) de ladite tuyère de soufflante à section variable (42).

4. Ensemble selon la revendication 1, 2 ou 3, dans lequel ledit système actionneur (54) comporte un actionneur rotatif (60) permettant de faire fléchir le segment flexible adaptatif (48).

5. Ensemble selon la revendication 1, 2 ou 3, dans lequel ledit système actionneur (54) comporte un actionneur linéaire (60') permettant de faire fléchir ledit segment flexible adaptatif (48).

6. Ensemble selon l'une quelconque des revendications précédentes, dans lequel ladite tringlerie (52) est apte à modifier une forme dudit segment flexible adaptatif (48) en réponse audit système actionneur (54) qui entraîne ladite tringlerie.

7. Ensemble selon l'une quelconque des revendications précédentes, dans lequel ladite section de sortie de soufflante définit une section de sortie de soufflante au moins partiellement annulaire entre ladite nacelle de soufflante et ladite soufflante primaire.

8. Turbomoteur (10), comprenant :
un moteur primaire défini autour d'un axe (A) ;
un système d'engrenages (22) entraîné par ledit moteur primaire ;
une soufflante (20) entraînée par ledit système d'engrenages autour dudit axe ; et
un ensemble de nacelles selon l'une quelconque des revendications précédentes ;
ladite nacelle primaire étant définie au moins partiellement autour dudit moteur primaire ; et
ladite nacelle de soufflante étant montée autour de ladite soufflante.

9. Turbomoteur selon la revendication 8, dans lequel ledit segment flexible adaptatif (48) se transforme relativement à ladite nacelle de soufflante (34) sans aucune ligne charnière discrète.

10. Procédé permettant de faire varier une section de sortie de soufflante d'un turbomoteur (10), comprenant les étapes consistant à :
(A) mettre en place une tuyère de soufflante à section variable (42) de manière à définir une section de sortie de soufflante (44) entre une nacelle de soufflante (34) et une nacelle primaire (12) ; et
(B) transformer un segment flexible adaptatif (48) de la tuyère de soufflante à section variable entre une première forme et une deuxième forme pour faire varier la section de sortie de soufflante (44), lequel segment flexible adaptatif (48) comporte une pluralité de revêtements flexibles (50a, 50b) intégrés dans un tronçon de revêtements (56) de la nacelle de soufflante (34), une tringlerie (52, 52') et un système actionneur (54).

11. Procédé selon la revendication 10, dans lequel l'étape (B) comprend en outre l'étape consistant à :
augmenter la section de sortie de soufflante (44) au cours du décollage.

12. Procédé selon la revendication 10 ou 11, dans lequel ladite étape (B) comprend en outre l'étape consistant à faire fléchir les revêtements flexibles (50a, 50b) du segment flexible adaptatif ; et/ou dans lequel ladite étape (B) comprend en outre l'étape consistant à déformer les revêtements flexibles (50a, 50b) du segment flexible adaptatif ; et/ou dans lequel ladite étape (B) comprend en outre l'étape consistant à modifier une forme du segment flexible adaptatif.

13. Procédé selon la revendication 10, 11 ou 12, dans lequel ladite étape (A) comprend en outre l'étape consistant à :
mettre en place la tuyère de soufflante à section variable (42) au niveau d'un tronçon le plus en queue de la nacelle de soufflante, le segment flexible adaptatif (48) comportant un bord de fuite (34T) de la tuyère de soufflante à section variable.

14. Procédé selon la revendication 10, 11, 12 ou 13, dans lequel ladite étape (B) comprend en outre l'étape consistant à :
régler de manière asymétrique la section de sortie de soufflante (44) de manière à orienter la poussée à travers la tuyère de soufflante à section variable (42).
